(19) Europäisches Patentamt

European Patent Office

Office européen des brevets

(11) **EP 3 306 970 A1**

(12) **EUROPEAN PATENT APPLICATION**

(43) Date of publication:
**11.04.2018 Bulletin 2018/15**

(51) Int Cl.:
***H04W 12/08*** (2009.01)   *H04W 4/00* (2018.01)
***H04W 12/04*** (2009.01)

(21) Application number: **16002171.3**

(22) Date of filing: **07.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Giesecke+Devrient Mobile Security GmbH**
**81677 München (DE)**

(72) Inventor: **Tea, Vui Huang**
**SE-12061 Stockholm (SE)**

(54) **LPWA COMMUNICATION SYSTEM KEY MANAGEMENT**

(57)    A communication system comprising a wireless Low-Power Wide Area Network LPWA and a service layer to remove non permitted application servers from the system so as to prevent their accessing end devices.

Output of key database (AppKey):
if HSM is in use, output of keydatabase is encrypted AppKey
if HSM is not in use, output of key database is unencrypted AppKey

Fig. 3

Printed by Jouve, 75001 PARIS (FR)

EP 3 306 970 A1

## Description

Field of the invention

The present invention relates to a communication system employing a wireless Low-Power Wide Area Network LPWA to connect end devices to gateways, which gateways connect to network servers that also connect to application servers, and particularly to key management in such a system. LoRa is such an LPWA, and the LoRa infrastructure is such a communication system.

Background of the invention

Low-Power Wide Area Network LPWA such as the LoRa network allow end devices such as various M2M modules to contact gateways over a large distance. This allows end devices to be contacted also in regions not covered by regular mobile phone networks such as 3G/4G.

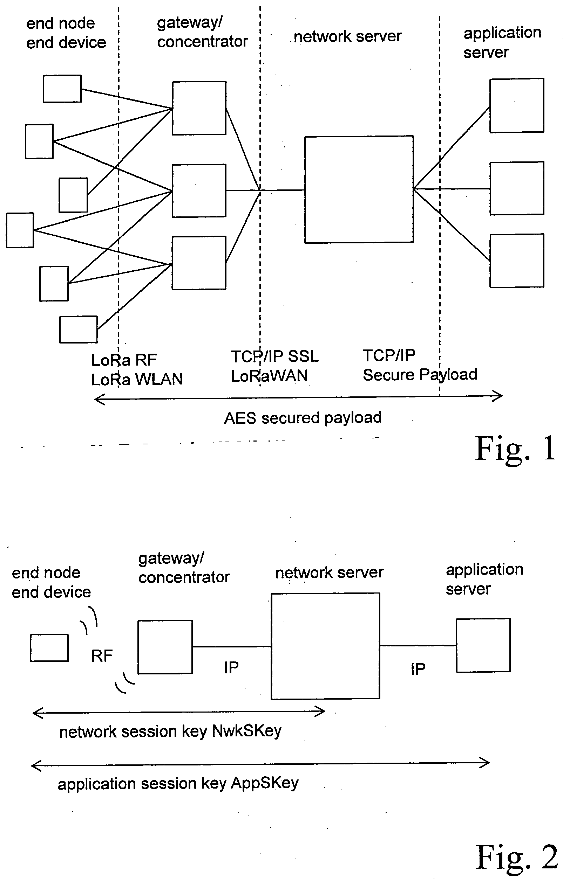

Fig. 1 shows the basic structure of a LoRa infrastructure as an example of an LPWA communication system. Multiple end devices, here named end nodes are connected to multiple gateways, also named concentrators via a wireless ("RF") LoRaWAN network. Usually the number of end devices / nodes is larger than the number of gateways. Examples of end devices shown in Fig. 1 are pet tracking tags, smoke alarms tags, water meter tags, trash container tags, vending machine tags and gas monitoring tags. The gateways connect to a network server via some suited communication path that can physically be either wireless or wirebound, e.g. 3G/4G or Ethernet. Application servers connect to the network server also via some suited communication path that can physically be either wireless or wirebound. Both kinds of communication paths to the network server, i.e. those with the gateways and those with the applications servers, can be run as secure TCP/IP SSL connections. An option is to transfer data between end devices and application servers in an end-to-end encrypted form, as is indicated by an arrow at the base of Fig. 1.

To participate in a LoRaWAN LPWA network, each end-device has to be activated. For Over-The-Air Activation (OTAA) activation, end-devices must follow a join procedure prior to participating in data exchanges with the network-server. Typically each end-device is activated once on deployment, and it proceeds to continuously send data to the network server on a set schedule with the same session context information obtained from the join procedure. An end-device has to go through a new join procedure every time it has lost the session context information. The join procedure requires the end-device to be personalized with the following information before its starts the join procedure: a globally unique end-device identifier (DevEUI), the application identifier (AppEUI), and an AES-128 key (AppKey) (or in case other key, according to symmetric algorithm used instead of AES-128).

During the join-in procedure at least the following steps are performed: (1) verification of the end device's permission to join the network; and (2) verification of at least one application server's permission to access the end device of step (1). Only if both permissions (1) and (2) are verified successfully, joining-in of the end device to the LPWA network in relation to the application server is executed successfully.

Further, the join-in procedure can imply the derivation of symmetric session keys, particularly of two symmetric session keys, namely a Network Session Key NwSKey and an Application Session Key AppSKey, as will be described in more detail in a subsequent section.

Subsequent to a successful OTAA join-in procedure that also includes session key derivation, data transferred between an end device and an application server are transferred in an encrypted form, using the symmetric keys derived during the join-in procedure. Once an application server has a symmetric key for participating in encrypted communication with a particular end device, it is cumbersome for a network server to present said application server from further communication to said end device, even if the application server turns out to be invalidated at some time. Further, key management can be cumbersome. Network servers might in addition be a target of attacks and therefore have a low level of reliability and security if employed for key derivation.

After successful join-in, the network server sends to the end device a join-in accept message to inform the end device on its successful joining in into the LPWA. The join-in message is normally computed using the AppKey of the end device in plaintext format.

Objective of the invention

It is an object of the present invention to provide a LPWA based communication system that has a secure and reliable key management infrastructure.

It is a particular object of the present invention to provide, in such a communication system, key management that allows preventing invalidated application servers from further communicating to end devices for which they are invalidated meanwhile.

It is a further particular object of the present invention to provide a secure key derivation basis underlying the key management infrastructure.

This invention describes a Key Server and Service Layer for Low-Power Wide Area Network (LPWA). To minimize complexity and power-drain in LPWA devices, LPWA networks by and large use shared symmetric keys as the foundation of their authentication and trust. This approach however does not lend itself well to commercialization and wide-scale, multi-party usage of the system.

Summary of the invention

In greater detail, the object of the invention is achieved by a communication system with the features, according to claim 1. Embodiments of the invention are presented in dependent claims.

It is an essential feature of the present invention that the communication system comprises a service layer being constructed to perform an application server verification procedure. Said procedure comprises the step of verification of the AppEUI, or of a datum related to the AppEUI, so as to verify if the application server corresponding to the AppEUI is permitted to be connected to the end device from which the AppEUI was received. In case the application server is not permitted to access the end device, the application server is prevented from being connected to the end device. By this, non-permitted application servers, such as invalidated application servers, are removed from the communication. Permitted application servers, on the other hand, are not negatively affected and stay in the communication path as usual.

Particular embodiments of the invention comprise initiating the join-in means to perform a new join-in procedure in which the not permitted application server is not connected to the end device, so as to prevent the not permitted application servers from connecting to the end device.

According to embodiments of the invention, the communication system further comprises a security layer constructed for session key derivation. Preferably, a new join-in comprises the derivation of new session keys, and not permitted application servers are not provided with the new session keys. The security layer is in some embodiments a distinguished key server, separated from the network server, so as to prevent attacks executed onto the network server to have influence on the infrastructure of session key management and derivation.

According to highly secure embodiments of the invention, the security layer, particularly, the key server comprises a hardware security module in which the session keys such as NwkKey and AppSKey are derived in a particularly secure environment. Alternatively, or in addition, a join-in accept message is preferably computed inside the HSM. The join-in accept message is a standard message that is produced during the join-in procedure. In traditional LoRa join-in, the join-in accept message is computed by the network server. According to preferred embodiments of the invention, the join-in accept message is computed by the key server. In particularly preferred embodiments, the join-in accept message is computed by the HSM. For computing the join-in accept message, the AppKey of the concerned end device has to be provided in plaintext. Computing the join-in accept message in the HSM eliminates the need that the plaintext (non-encrypted or decrypted) AppKey leaves the HSM.

Brief description of the drawings

Embodiments of the invention will now be described with reference to the accompanying drawings, throughout which like parts are referred to by like references, and in which represents:

Fig. 1    a diagram showing the basic structure of a typical LoRa network system, as an example of a LPWA communication system, according to the prior art;

Fig. 2    a diagram showing the use of two session keys NwkSKey, AppSKey derived by a security layer in a LoRa communication system, according to embodiments of the invention;

Fig. 3    an overview over a communication system, according to embodiments of the invention;

Fig. 4    an overview of a key server infrastructure including an HSM, according to embodiments of the invention;

Fig. 5    a diagram showing details of a HSM including both standard functionalities as well as proprietary functionalities provided by proprietary CSN functions imported to and executed inside the HSM.

Detailed description of the invention

The diagram of Fig. 2 illustrates the security layer in a popular LPWA system, the LoRa network, according to an embodiment of the invention. The security layer is in this embodiment implemented in a separate key server that is provided in addition to the network server, as a delegated server of the network server.

The end-device and the key server derive the two session keys NwkSKey and AppSKey:

NwkSKey =

aes128_encrypt(AppKey, 0x01 | AppNonce | NetID | DevNonce | pad16).

AppSKey =

aes128_encrypt(AppKey, 0x02 | AppNonce | NetID | DevNonce | pad16).

The shared (identical) symmetric keys are stored in the end-device and the key-server. In LoRa, these are referred to as the AppKey (Application Key). The AppKey is used by the end-device and the network/Application-server separately to generate the common Network Session Key (NwkSKey) and the Application Session Key (AppSKey).

The NwkSKey is used as a transport security between the end-device and the Network-server. Typically in a LPWA network, there is one central Network-server serving multiple unrelated Application-servers. The data is encrypted and decrypted at the Network-server; hence the data is not confidential between the end-device and the Application-Server. This is not end-to-end security.

In end-to-end security, the data must be confidential between the end-device and the Application-Server. The data is encrypted and decrypted at the Application-Server. Hence the Network-server is not privy to the encrypted data that is passing through it. The AppSKey is used to provide end-to-end security between the end-device and the Application-Server.

For multiple unrelated parties to obtain end-to-end security to the same end-device, the key-server will need to distribute the same AppSKey to multiple application-servers. As the end-devices perform a join procedure only on deployment, reset or when the session context is lost; the AppSKey will remain the same in this period. Problem arises when companies terminate their relationship with the LPWA system as these companies' application-server may have retained cached copies of the AppSKey of all the end-devices that they have communicated with. It would be like a tenant having a copy of the house key after they have been evicted - while the door lock remains unchanged, the evicted tenant will be able to re-enter the house at any time. This could result in privacy violation, theft (of intellectual properties), or even sabotage.

The solution to this problem is provided by the present invention and particularly by its several preferred embodiments. Whenever a party is rejected access to the end-devices, the service-layer directly or indirectly causes the end-devices accessible by the rejected party to perform a new join procedure (as a preferred way of eliminating rejected parties). This could be an instruction to the end-device to reset, deactivate-and-reactivate or lose the session context. Then on activation success, the new AppSKey is redistributed by the key server to all parties that still have valid access to these end-devices.

Methods of enforcing a new join-in include but are not limited to:

- Service-layer sending a proprietary downlink command (via the network-server) to the end-device to instruct it to stop using and/or delete the nwkskey Network Session Key and appskey Application Session Key, and perform a new join procedure.
- Service-layer instructing the network-server to stop using and/ or delete the nwkskey Network Session Key. This assumes the end-device has the logic of detecting that the session is not valid anymore, and automatically performs a new join procedure.
- Disconnecting the end-device from the network via a simulated replay attack by sending previously recorded join-request message. The service layer server does this from an end-device in the range of a connected gateway. This assumes the end-device has the logic of detecting that the session is not valid anymore, and automatically performs a new join procedure.

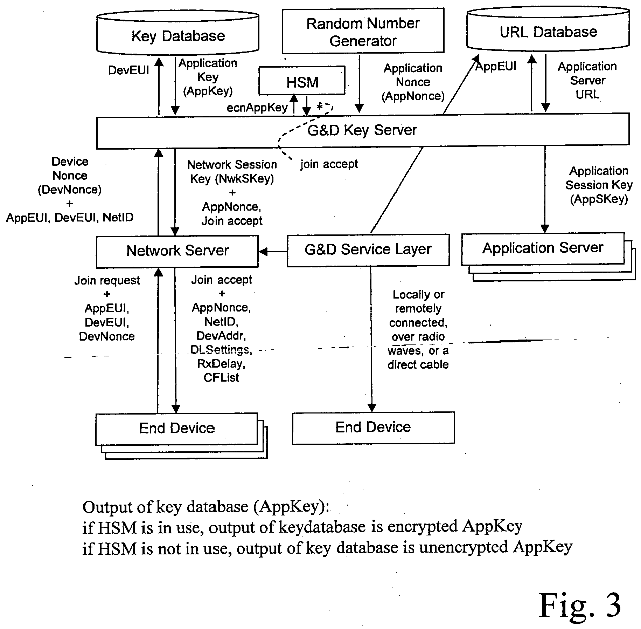

Fig. 3 shows an overview over a communication system, according to embodiments of the invention. Crucial element of the system is a service layer, here named "G&D service layer". Crucial element of some preferred embodiments is a key server, here named "G&D key server". The elements of the end device, the application server, and the network server are, on the other hand, well-known elements usually present in a communication infrastructure including a LoRa network. Crucial element of particularly preferred embodiments is a hardware security element "HSM" that performs delegated session key derivation and generation of join in accept messages for the key server. Input to the HSM is an encrypted AppKey of an and device. Output of the HSM is a join accept message.

To participate in a LoRaWAN LPWA network, generally each end-device has to be activated, as was briefly stated in the introductory part of this specification already. The following narration details an OTAA activation of an LPWA end-device with Key Server.

The following describes activation of an end-device via Over-The-Air Activation (OTAA) when an end-device is deployed or reset. In the described case, also session keys are derived on occasion of the join-in procedure. Very basic join-in procedures, which will not be described here, might be performed without session key derivation.

1. An end-device is deployed or reset; consequently it sends an OTAA join-request message uplink to the network-server. The join-request message contains the AppEUI and DevEUI of the end-device followed by a random DevNonce. The DevNonce can be extracted by issuing a sequence of RSSI measurements under the assumption that the quality of randomness fulfills the criteria of true randomness.

2. According to the LoRa specification, for each end-device the network-server keeps track of a certain number of DevNonce values used by the end-device in the past, and ignores join requests with any of these DevNonce values from that end-device. This mechanism prevents replay attacks by sending previously recorded join-request messages with the intention of disconnecting the respective end-device from the network.

3. The network-server sends an AppKey request to the key-server. The request contains the AppEUI, DevEUI and DevNonce from the join-request message. The request contains the NetID from the network-server.

4. The key-server checks if the end-device is permitted to join the network. The following assumes that the end-device is permitted to join the network.

5. The key-server checks if the AppEUI is permitted access to this end-device, this info could be stored on the URL database. The following assumes that AppEUI is permitted access to this end-device.

6. The key-server retrieves the AppKey from the key database associated with the DevEUI. In embodiments in which no HSM is present (or the HSM is not in use), the AppKey is output from the key database in plaintext form, i.e. non-encrypted form. I embodiments in which an HSM is in use for session key derivation / join in accept message generation, the AppKey is output from the database in encrypted form.

7. The key-server also requests an AppNonce from the Random Number Generator (RNG). The RNG can be a pseudo RNG (weak security), or a hardware True RNG (strong security).

8. The key-server uses the AppKey, AppNonce, network identifier Net-ID & DevNonce to derive two session keys: Network Session Key (NwkSKey) and Application Session Key (AppSKey).

9. The key-server uses the AppEUI to find the URL for the application-server from the URL database.

10. If the key-server is able to retrieve the URL for the application-server, it securely sends the AppSKey to the Application-Server, e.g. using SSL. The application-server uses the AppSKey to perform end-to-end secure communication with the end-device.

11. The key-server sends the NwkSKey to the network-server. The network-server uses the NwkSKey to create a join-accept message to send back to the end-device. The join-accept message contains the AppNonce, NetID, DevAddr, a delay between TX and RX (RxDelay) and an optional list of channel frequencies (CFList) for the network the end-device is joining.

12. The end-device uses the information in the join-accept to derive the two session keys: Network Session Key (NwkSKey) and Application Session Key (AppSKey). These keys will be stored and used perpetually until the end-device is reset or when the session context is lost.

The now following narration relates to removal of an application server from the service layer, and thus from participation in the communication.

The following describes the service-layer when access to the end-device is removed from an application-server.

1. The Service layer marks the AppEUI / Application URL as un-trusted in the URL database (or equivalent). This action could include deleting the AppEUI / Application URL record such that the key-server is not able to send the keys.

2. The service-layer directly or indirectly causes the end-devices accessible by the rejected party to perform a new join procedure in one or more of the following ways:

    a. Service-layer sending a proprietary downlink command (via the network-server) to the end-device to instruct it to stop using and/or delete the nwkskey Network Session Key and appskey Application Session Key, and perform a new join procedure.

    b. Service-layer instructing the network-server to stop using and/ or delete the nwkskey Network Session Key. This assumes the end-device has the logic of detecting that the session is not valid anymore, and automatically performs a new join procedure.

    c. Disconnecting the end-device from the network via a simulated replay attack by sending previously recorded join-request message. The service layer server does this from an end-device in the range of a connected gateway. This assumes the end-device has the logic of detecting that the session is not valid anymore, and automatically performs a new join procedure.

3. The end-device performs a new join procedure and derives a new set of two session keys: Network Session Key (NwkSKey) and Application Session Key (AppSKey).

4. The key-server updates all the trusted application-servers with the new AppSKey of the end-device.

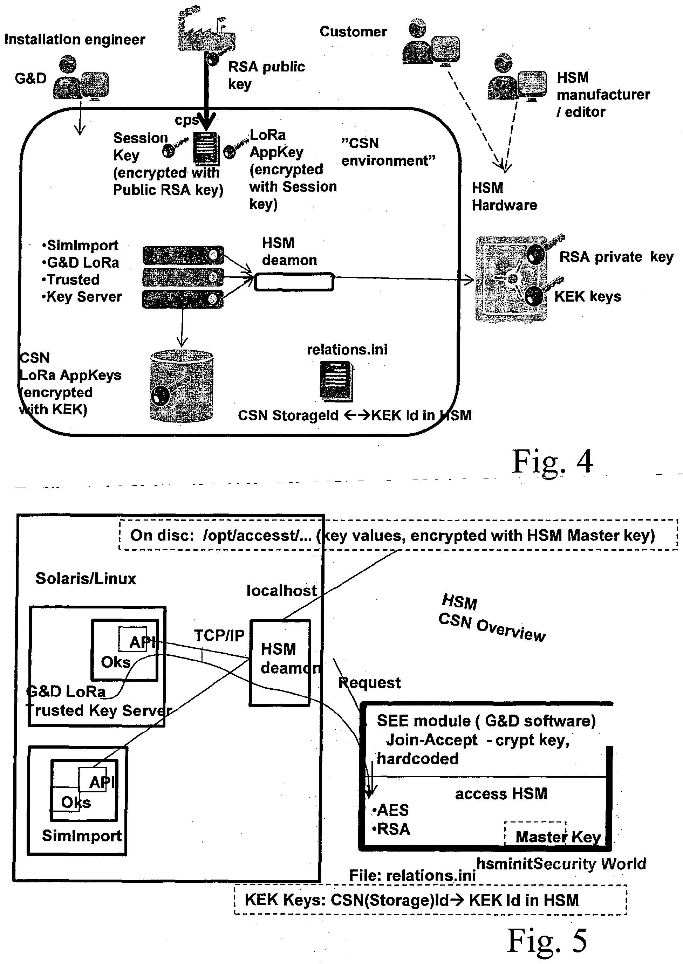

The following narration will further detail a Hardware Security Module HSM contained in a key server, as that depicted in Fig. 3, according to embodiments of the invention. HSM and key server infrastructure details are depicted in Fig. 4, HSM internal working details in Fig. 5.

The following software modules are preferably provided in the HSM key infrastructure, as is particularly visible in Fig. 5.

(1) OKS: A proprietary internal cryptographic API. It exists in two versions, selected by configuration: oksStandard and oksAccessHsm.

(2) HSM API: a native API for access to the full functionality of the HSM, including access to SEE modules.

(3) access daemon (hardserver): A software component that facilitates access to the HSM through the HSM API. It manages load-balancing between several HSM instances and manages secure key storage in the file system of the host.

(4) CSN SEE module: A custom proprietary SEE module provided by G&D.

It provides LoRa security operations including support for algorithms not available in standard HSMs.

HSMs provide secure storage of keys + ability to perform cryptographic operations using those keys (including secure key generation). HSMs are known that also support 'Secure Execution Environment' (SEE) which allows custom code (SEE modules) to execute inside the HSM. By only allowing the HSM itself (and SEE modules) access to protected keys they can never be extracted or exposed. Besides security a HSM can also be used to speed up crypto operations. Hardware component connected through the network (Other models exist, for example as PCI plugin cards). Access to the HSM can be done through multiple industry standard APIs. CSN uses a proprietary API (HSM) for access to the CSN SEE module.

The HSM contains a CSN SEE Module which is a software written in C and executing in a protected environment inside the HSM. CNS SEE module has access to keys not accessible outside the HSM and has been designed for protecting LoRa cryptographic keys. It includes support for encrypted (U)SIM import and secure management of LoRa cryptographic keys. It supports algorithms not available through standard HSM APIs.

To use a HSM in the key server is a preferred solution,, LoRa cryptographic keys should never be stored in clear format.. A HSM provides for a particular secure prevention of plaintext keys to become public.

Use cases of employing a key server including an HSM can be as follows.

(1) LoRa encryption with protected keys: process LoRa Join-accept messages when the application keys are stored in the DB database in encrypted format.

(2) Secure transport and encryption of LoRa AppKeys: Transport application keys from LoRa module vendors to the CSN in a secure way.

(3) Change Storage KEK: Change includes re-encryption of the LoRa AppKeys in the CSN DB; performed by using a command line tool on the CSN database.

All three above use cases have in common the following features. Each LoRa end device has one LoRa AppKey. LoRa AppKeys are based on symmetric algorithm AES (Advanced Encryption Standard). LoRa AppKeys are stored in the LoRa end device and the CSN database. For enhanced security, CSN keys can be stored in encrypted format. HSM for separate Hardware and high security is provided. Software Encryption is done in CSN OKS lib. Mapping from CSN KEK id to HSM key id is done in the SEE module based on a configuration file loaded at HSM startup.

A secure transport of LoRa AppKeys from a SIM vendor to the CSN database is performed by encrypted SIM data import. In the SIM import file, Lo-Ra AppKeys are encrypted with an AES Session Key. The Session Key is included in the file header and is RSA encrypted with a public key corresponding to a private key in the HSM. The public key (X.509 certificate) is given to the third party beforehand. A secure management and storage of keys is achieved in that LoRa cryptographic keys cannot be read outside of HSM. Further, encryption of LoRa Join-accept messages is done inside HSM. Finally, KEKs, RSA keys etc. are generated in the HSM and never leave it.

Fig. 3 shows a Random number generator which will be further detailed in the now following narration.

The aim of the Random number generator is to provide a Nonce, so as to achieve a high security enhancement for Low-Power Wide-Area Network (LPWAN) IoT & M2M Authentication by preventing replay attacks.

In LoRaWan LPWA embodiments, as far as it is secured against replay attacks, a random value has to be provided by the authentication server and used by the IoT/M2M end-device to derive a unique set of network and application keys for secure end-to-end security. This random value plays a very crucial part in the strength of the keys, and could be its weakest point in the whole security chain if it is not managed properly.

Consequently carefully consideration must be taken in the generation of the random value. Instead of leaving the 3rd party service providers individually to inexperiencely and insecurely generate weak pseudo-random values as is the situation today, G&D LoRa Join Server can offer a vast LoRa security enhancement by securely generating the random values centrally with a hardware random number generator (TRNG, True Random Number Generator). A TRNG is different from a software or pseudo random number generator. A pseudo random number generator approximates the assumed behavior of a real hardware random number generator and is only sufficient for low-security or unimportant applications. A TRNG is required for high security and crucial applications such as generating cryptographic keys, random outcomes for online gambling and statistics modelling.

TRNG are certified and tested by various organizations and methods. Among them is eCOGRA (E-Commerce and Online Gaming Regulation and Assurance) and the National Institute of Standards and Technology NIST SP800-22 (Test Suite for Random and Pseudorandom Number Generators for Cryptographic Applications) from the U.S. Department of Commerce. This solution can be further protected in a secure, trusted G&D managed service environment. G&D is a trusted supplier of solutions to governments, banks, mobile operators and casinos. Similarly we can create a turnkey Low-Power Wide- Area Network (LPWAN) IoT & M2M authentication solution with a certified and trusted TRNG.

**Claims**

1. A communication system,
   comprising:

   a) a wireless Low-Power Wide Area Network LPWA;
   b) at least one network server;
   c) at least one application server or a plurality of application servers, connectable to the network servers;
   d) at least one gateway or a plurality of gateways;
   e) at least one end device or a plurality of end devices, each end device being personalized with at least:
   f) an, at least within the LPWA network, unique device identifier DevEUI,
   g) for at least one application server, an application server identifier AppEUI and a symmetric cryptographic key AppKey of respective application server;
   h) wherein each of the one or plurality of end devices is connectable to the network server via a gateway, wherein each end device is connectable to a gateway via the LPWA;
   i) wherein the system comprises join-in means constructed to perform a join-in procedure of joining in end devices to the LPWA by execution of an over-the-air-activation OTAA procedure network protocol, the join-in procedure comprising:
   j) at the network server, receiving from an end device at least the DevEUI and the AppEUI, and preferably further a random device nonce DevNonce,
   k) verifying, using the DevEUI, if the end device is permitted to join the LPWA and, if it is permitted, activating the end device in the system, and
   l) connecting, using the AppEUI, the activated end device to the application server specified by the AppEUI;

   **characterized by**:

   m) the system further comprising a service layer, the service layer being constructed to perform an application server verification procedure, said procedure comprising the steps:
   n) verification of the AppEUI, or of a datum related to the AppEUI, so as to verify if the application server corresponding to the AppEUI is permitted to be connected to the end device from which the AppEUI was received,
   o) in case the application server is not permitted to access the end device, preventing the application server from being connected to the end device.

2. The communication system according to claim 1, wherein the step o), of preventing the application server from being connected to the end device, is implemented in that the service layer is constructed to perform the steps: p) at the service layer, marking the application server as not permitted; q) initiating the join-in means to perform a new join-in procedure in which the not permitted application server is not connected to the end device.

3. The communication system according to claim 2, wherein
   step q) initiating the join-in means to perform a new join-in procedure is achieved by either one of:

(1) sending a proprietary downlink command from the service layer to the end device via the network server, to thereby instruct the end-device to stop using and/ or delete the NwkSKey Key and AppSKey, and perform a new join procedure;

(2) the service-layer instructing the network-server to stop using and/or to delete the NwkSKey, to thereby initiate the end device to detect that the session is not valid anymore, and automatically performs a new join-in procedure;

(3) Disconnecting the end-device from the network via a simulated replay attack by sending, from the service layer to the network server, a previously recorded join-request messages that has already been sent from the end device to the network server, to thereby initiate the end device to detect that the session is not valid anymore, and automatically performs a new join-in procedure.

4. The communication system according to claim 1, further comprising:

r) a security layer, installed in the network server itself or in a delegated server of the network server, particularly in a key server, which security layer is constructed to perform, on the occasion of the join-in procedure step i), a session key derivation procedure in which, therein using the AppKey of the end device, two sessions keys for encrypted communication between the end device and the application server are derived, namely a network session key NwkSKey and an application session key AppSKey, wherein:

r1) the NwkSKey is provided for encrypted communication between the network server and the end device, and

r2) the AppSKey is provided for encrypted communication between the application server and the end device.

5. The communication system according to claim 4, wherein the step o), of preventing the application server from being connected to the end device, is implemented in that the service layer is constructed to perform the steps: p) at the service layer, marking the application server as not permitted; q) initiating the join in means to perform a new join-in procedure and the security layer to derive new session keys NwkSKey and AppSKey are, and to distribute the new session keys only to permitted application servers, if any, and not to not permitted application servers.

6. The communication system according to claim 4 or 5, wherein the r) security layer is installed in a delegated server of the network server which is constructed as a key server.

7. The communication system according to claim 4, 5 or 6, wherein
step q) initiating the join-in means to perform a new join-in procedure is achieved by either one of:

(1) sending a proprietary downlink command from the service layer to the end device via the network server, to thereby instruct the end-device to stop using and/or delete the NwkSKey Key and AppSKey, and perform a new join procedure;

(2) the service-layer instructing the network-server to stop using and/ or to delete the NwkSKey, to thereby initiate the end device to detect that the session is not valid anymore, and automatically performs a new join-in procedure;

(3) Disconnecting the end-device from the network via a simulated replay attack by sending, from the service layer to the network server, a previously recorded join-request messages that has already been sent from the end device to the network server, to thereby initiate the end device to detect that the session is not valid anymore, and automatically performs a new join-in procedure.

8. The communication system according to any one or several of claims 4 to 7, wherein the r) security layer includes a hardware security module HSM constructed to derive the session keys and/or to compute a Join-in accept message.

9. The communication system according to claim 8, wherein the HSM includes both (1) standard HSM software provided by a HSM manufacturer or editor as well as (2) custom software imported to the HSM by an owner different from the a HSM manufacturer or editor, wherein the standard HSM software and the custom software cooperate in session key derivation.

end node
end device

gateway/
concentrator

network server

application
server

LoRa RF
LoRa WLAN

TCP/IP SSL
LoRaWAN

TCP/IP
Secure Payload

AES secured payload

# Fig. 1

end node
end device

gateway/
concentrator

network server

application
server

RF

IP

IP

network session key NwkSKey

application session key AppSKey

# Fig. 2

Output of key database (AppKey):
if HSM is in use, output of keydatabase is encrypted AppKey
if HSM is not in use, output of key database is unencrypted AppKey

# Fig. 3

Installation engineer

G&D

Customer

RSA public key

HSM manufacturer / editor

cps

Session Key (encrypted with Public RSA key)

LoRa AppKey (encrypted with Session key)

"CSN environment"

HSM Hardware

•SimImport
•G&D LoRa
•Trusted
•Key Server

HSM deamon

RSA private key

KEK keys

CSN LoRa AppKeys (encrypted with KEK)

relations.ini

CSN StorageId ←→KEK Id in HSM

Fig. 4

On disc: /opt/accesst/... (key values, encrypted with HSM Master key)

Solaris/Linux

localhost

HSM CSN Overview

API
Oks

TCP/IP

HSM deamon

G&D LoRa Trusted Key Server

Request

API
Oks

SimImport

SEE module ( G&D software)
Join-Accept - crypt key, hardcoded

access HSM

•AES
•RSA

Master Key

hsminitSecurity World

File: relations.ini

KEK Keys: CSN(Storage)Id→ KEK Id in HSM

Fig. 5

Europäisches
Patentamt

European
Patent Office

Office européen
des brevets

# EUROPEAN SEARCH REPORT

EP 16 00 2171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N Sornin ET AL: "LoRa Specification V1.0", LoRa Alliance Inc., 31 January 2015 (2015-01-31), XP055286529, Retrieved from the Internet: URL:https://www.lora-alliance.org/portals/ 0/specs/LoRaWAN Specification 1R0.pdf [retrieved on 2016-07-07] * the whole document * | 1-9 | INV. H04W12/08  ADD. H04W4/00 H04W12/04 |
| X | "LoRa MAC Specification;LTN(14)011004_LoRa_MAC_Speci fications", ETSI DRAFT; LTN(14)011004_LORA_MAC_SPECIFICATIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 16 January 2014 (2014-01-16), pages 1-23, XP014159445, [retrieved on 2014-01-16] * the whole document * | 1-9 | |
| X | GARCIA R MARIN UNIVERSITY OF MURCIA A KANDASAMY A PELOV ACKLIO D: "LoRaWAN Authentication in RADIUS; draft-garcia-radext-radius-lorawan-01.txt" , LORAWAN AUTHENTICATION IN RADIUS; DRAFT-GARCIA-RADEXT-RADIUS-LORAWAN-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 July 2016 (2016-07-08), pages 1-16, XP015114163, [retrieved on 2016-07-08] * the whole document * | 1-9 | TECHNICAL FIELDS SEARCHED (IPC)  H04W |

-/--

The present search report has been drawn up for all claims

| Place of search | Date of completion of the search | Examiner |
|---|---|---|
| Munich | 8 March 2017 | Ghomrasseni, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Olivier Hersent ET AL: "LoRa Device Developer Guide", Orange Connected Objects & Partnerships, 30 April 2016 (2016-04-30), XP055286484, Retrieved from the Internet: URL:https://partner.orange.com/wp-content/uploads/2016/04/LoRa-Device-Developer-Guide-Orange.pdf [retrieved on 2016-07-06] * the whole document * | 1-9 | |
| A | US 2012/265979 A1 (YEGIN ALPER [TR] ET AL) 18 October 2012 (2012-10-18) * the whole document * | 1-9 | |

**TECHNICAL FIELDS SEARCHED (IPC)**

The present search report has been drawn up for all claims

| Place of search | Date of completion of the search | Examiner |
|---|---|---|
| Munich | 8 March 2017 | Ghomrasseni, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 16 00 2171

This annex lists the patent family members relating to the patent documents cited in  the above-mentioned European search report.
The members are as contained in the European Patent Office EDP file on
The European Patent Office is in no way liable for these particulars which are merely given for the purpose of information.

08-03-2017

| Patent document cited in search report | Publication date | Patent family member(s) | Publication date |
|---|---|---|---|
| US 2012265979 A1 | 18-10-2012 | CN 103597774 A | 19-02-2014 |
| | | CN 103621126 A | 05-03-2014 |
| | | CN 103703698 A | 02-04-2014 |
| | | EP 2697916 A2 | 19-02-2014 |
| | | EP 2697933 A2 | 19-02-2014 |
| | | EP 2697992 A2 | 19-02-2014 |
| | | JP 6022539 B2 | 09-11-2016 |
| | | JP 6066992 B2 | 25-01-2017 |
| | | JP 2014513349 A | 29-05-2014 |
| | | JP 2014513472 A | 29-05-2014 |
| | | JP 2014517560 A | 17-07-2014 |
| | | KR 20140023991 A | 27-02-2014 |
| | | KR 20140024894 A | 03-03-2014 |
| | | KR 20140029447 A | 10-03-2014 |
| | | US 2012265979 A1 | 18-10-2012 |
| | | US 2012265983 A1 | 18-10-2012 |
| | | US 2012266223 A1 | 18-10-2012 |
| | | WO 2012141555 A2 | 18-10-2012 |
| | | WO 2012141556 A2 | 18-10-2012 |
| | | WO 2012141557 A2 | 18-10-2012 |

EPO FORM P0459

For more details about this annex : see Official Journal of the European Patent Office, No. 12/82